# EUROPÄISCHE PATENTSCHRIFT

(11) **EP 1 741 310 B1**
(45) Veröffentlichungstag und Bekanntmachung des Hinweises auf die Patenterteilung: **23.01.2008**
(21) Anmeldenummer: 05740064.0
(22) Anmeldetag: 26.04.2005
(51) Int. Cl.: H04Q 7/38

(54) **Verfahren zum Verbindungsaufbau mit Pre-paging bei optimierter Ressourcenausnutzung**
Method for setting up a link with prepaging while optimizing use of resources
Procédé pour établir une liaison avec recherche anticipée tout en optimisant l'utilisation des ressources

(30) Priorität: 27.04.2004 DE 102004020535
(43) Veröffentlichungstag der Anmeldung: 10.01.2007
(73) Patentinhaber: Nokia Siemens Networks GmbH & Co. KG, 81541 München (DE)
(72) Erfinder: PRÜSER, Jürgen, 36251 Bad Hersfeld (DE); VOGELSBERG, Norbert, 34621 Frielendorf (DE); WIEHE, Ulrich, 36251 Bad Hersfeld (DE)
(86) Internationale Anmeldenummer: PCT/EP2005/051871
(87) Internationale Veröffentlichungsnummer: WO 2005/107305

(56) Entgegenhaltungen:
- WO-A-00/69184
- "Digital cellular telecommunications system (Phase 2+) (GSM); Universal Mobile Telecommunications System (UMTS); Technical Report on Pre-paging (3GPP TR 23.908 version 4.0.0 Release 4); ETSI TR 123 908" ETSI STANDARDS, EUROPEAN TELECOMMUNICATIONS STANDARDS INSTITUTE, SOPHIA-ANTIPO, FR, Bd. 3-CN2, Nr. V400, März 2001 (2001-03), XP014005052 ISSN: 0000-0001

## Beschreibung

Die Erfindung betrifft ein Verfahren zum Verbindungsaufbau mit Pre-Paging zu einem mobilen Endgerät nach dem Oberbegriff des Anspruchs 1. Die Erfindung betrifft weiterhin eine Vermittlungsstelle für das Senden und Empfangen von Routingnachrichten sowie eine Vermittlungsstelle und ein Mobilfunknetz mit einer solchen Vermittlungsstelle nach den Oberbegriffen der Ansprüche 4, 5 und 6.

Beim verbindungsaufbau zu einem gerufenen mobilen Endgerät muss die Vermittlungsstelle die aktuelle Funkzelle des Endgerätes wissen, und es wird eine Suchmeldung für das Endgerät gesendet, um den aktuellen Status des Endgerätes abzufragen. Durch dieses Paging können die Ressourcen für den Verbindungsaufbau an der Schnittstelle zwischen Vermittlungsstelle und Radiosubsystem reserviert werden und auch festgestellt werden, ob ein Verbindungsaufbau derzeit gar nicht möglich ist, etwa weil das Endgerät ausgeschaltet oder außerhalb des Bereiches einer Funkzelle ist.

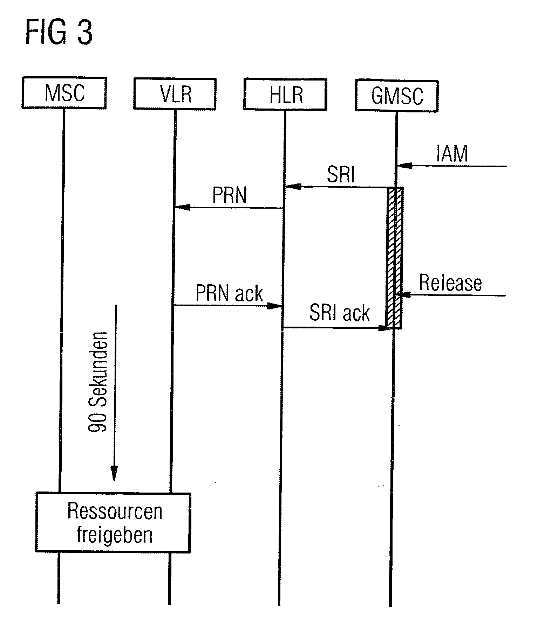

Vor dem Paging findet in GSM/UMTS-Netzwerken für gewöhnlich das Aufsetzen eines Rufpfades unter Reservierung der einer MSRN (Mobile Station Roaming Number) zugehörigen Ressourcen statt. Dieses Routing durch das Vermittlungsnetz wird SRI/PRN-Prozedur genannt und nun anhand der Figur 3 näher beschrieben.

Der Verbindungswunsch des rufenden Teilnehmers erreicht als IAM-Nachricht (Initial Address Messaging) eine Gateway-Vermittlungsstelle (GMSC, Gateway Mobile Services Switching Center), welche mit dem Netzwerk des rufenden Teilnehmers verbunden ist. Die GMSC versucht auf diese Nachricht hin ein Routing zu der besuchten Vermittlungsstelle (MSC, Mobile Services Switching Center), in deren Zuständigkeitsbereich sich das gerufene Endgerät befindet.

Dazu sendet die GMSC eine Routinganfrage SRI (Send Routing Information) an eine Heimatdatenbank mit Benutzerdaten (HLR, Home Location Register), in der u.a. eine Referenz auf die besuchte Vermittlungsstelle MSC des gerufenen Teilnehmers abgelegt ist. Das HLR übermittelt daraufhin eine Reservierungsanfrage für eine MSRN an eine Nutzerdatenbank VLR (Visitor Location Register) der MSC, in welcher eine Kopie der relevanten Nutzerdaten aller besuchenden Teilnehmer abgelegt ist.

Die MSC/VLR weist nun der Anfrage des HLR eine MSRN zu und schickt sie an das HLR zurück. Gleichzeitig wird ein Zeitgeber gestartet, damit nach Ablauf von 90 Sekunden die Ressourcen wieder freigegeben werden können, sofern die zurückgegebene MSRN in diesem Intervall nicht genutzt wird. Nachdem das HLR die Bestätigungsnachricht PRN ack erhalten hat, übermittelt es seinerseits eine Bestätigungsnachricht SRI ack an die GMSC, um dieser den erfolgreichen Abschluss des Routings anzuzeigen.

Wenn nun wie im Beispiel der Fig. 3 in dem durch das graue Rechteck angedeuteten Zeitraum zwischen Routinganfrage SRI und Routingbestätigung SRI ack die GMSC eine Freigabenachricht aus dem Netzwerk des rufenden Teilnehmers erhält, weil der rufende Teilnehmer inzwischen aufgelegt hat, so läuft der Zähler in dem VLR ab und die Ressourcen können freigegeben werden.

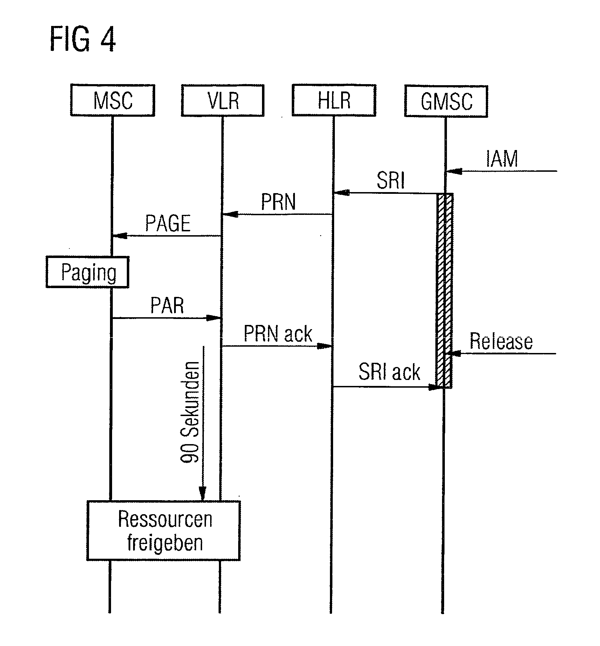

Nun kann es aber sein, dass der gesamte Rufpfad völlig unnötig reserviert worden ist, weil das gerufene Endgerät überhaupt nicht erreichbar ist. Als Ausweg wurde das sogenannte Pre-Paging vorgeschlagen, welches in dem Technical Report on Pre-Paging der 3GPP, TR 23.908 beschrieben ist. Der Pre-Paging-Mechanismus soll nun im Zusammenhang mit der Figur 4 näher beschrieben werden.

Der Nachrichtenfluss aufgrund des Verbindungswunsches eines rufenden Teilnehmers über die GMSC, das HLR und das VLR verändert sich hierbei nicht. Statt dass aber das VLR unmittelbar die Bestätigungsnachricht PRN ack zurückschickt, setzt es noch während des Routingprozesses das Paging in Gang. Dazu wird eine Paging-Anfrage PAGE an die MSC gesendet. Die MSC führt daraufhin ein Paging durch, d.h. sie übermittelt auf dem Pagingkanal eine Suchnachricht in alle Funkzellen desjenigen Bereiches (Location Area), in dem sich laut dem im VLR gespeicherten Location Area Code das gerufene Endgerät befindet. Wenn das Endgerät mit einer Statusmeldung geantwortet hat, kennt die MSC die aktuelle Funkzelle des Endgerätes und sendet eine Paging-Bestätigungsnachricht PAR an das VLR zurück. Der weitere Nachrichtenfluss entspricht dann wieder der SRI/PRN-Prozedur ohne Prepaging.

Figur 4 zeigt den Nachrichtenfluss im Erfolgsfall, wenn also das gerufene Endgerät auf das Paging antwortet. Sofern sich das gerufene Endgerät auf das Paging nicht meldet, muss hierbei keine MSRN reserviert und für 90 Sekunden freigehalten werden. Dadurch werden die Ressourcen in dem Vermittlungsnetzwerk geschont.

Wie aber aus den Figuren 3 und 4 ersichtlich, verlängert das Pre-Paging das Intervall zwischen Senden von SRI und Empfangen von SRI ack durch die Einführung von Pre-Paging (von ca. 1 s auf bis zu mehrere s). Damit steigt aber auch die Wahrscheinlichkeit, dass eine Release-Nachricht in diesem Zeitfenster empfangen wird. Dieser Fall tritt auf, wenn der anrufende Teilnehmer kurz nach vollständiger Wahl der Rufnummer des angerufenen Mobilfunkteilnehmers auflegt. Ferner wird deutlich, dass mit Einführung von Pre-Paging in diesem nun wahrscheinlicheren Fall nicht nur die MSRN, sondern auch Ressourcen im MSC/VLR an der Schnittstelle zum Radiosubsystem unnötig belegt sind.

Es ist daher Aufgabe der Erfindung, die durch die Einführung von Pre-Paging verursachte unnötige Ressourcenbelegung zu vermeiden.

Diese Aufgabe wird durch ein Verfahren nach Anspruch 1, eine Vermittlungsstelle nach Anspruch 4 oder 5 und ein Mobilfunknetz nach Anspruch 6 gelöst.

Die Lösung geht dabei von dem Prinzip aus, die in der GMSC empfangene Freigabenachricht des rufenden Teilnehmers zu nutzen, um eine unnötige Ressourcenvergabe zu vermeiden. Mit Hilfe dieser Information kann das Sicherheitsintervall von 90 Sekunden, welches die MSC auf eine Nutzung der Ressourcen wartet, auf das tatsächlich notwendige Zeitintervall verkürzt werden. Durch Weitergabe der Freigabenachricht von der GMSC an das VLR können die Ressourcen sofort freigegeben werden, sobald klar ist, dass sie nicht mehr benötigt werden.

Der Vorteil des erfindungsgemäßen Verfahrens ist, dass ein Pre-Paging ohne die zuvor beschriebenen Nachteile Verwendung finden kann. Damit wird nicht nur die MSRN und die mit ihr verbundenen Ressourcen rasch freigegeben, sondern auch die durch das Pre-Paging belegten Ressourcen.

Vorteilhafterweise wird dabei die Freigabeanweisung mit der temporären Kennung geroutet. Zum einen ist auf diese Weise unmissverständlich klar, welche Ressourcen freigegeben werden sollen. Zum anderen kann der bekannte Routingpfad verwendet werden.

Bevorzugt ist das Mobilfunknetz ein GSM-Netz oder ein UMTS-Netz. In beiden Netzen ist der beschriebene Paging-Mechanismus ein fester Bestandteil, so dass sie besonders von der vorgeschlagenen Erweiterung des Pre-Paging-Mechanismus profitieren können.

Die Erfindung wird nachstehend auch hinsichtlich weiterer Vorteile und Merkmale anhand von Ausführungsbeispielen und unter Bezug auf die beigefügten Zeichnungen beschrieben. Die Zeichnungen zeigen in:
Fig. 1 ein Mobilfunknetz mit erfindungsgemäßen Vermittlungsstellen;
Fig. 2 den erfindungsgemäße Nachrichtenfluss mit optimierten Pre-Paging;
Fig. 3 den Nachrichtenfluss ohne Pre-Paging in einem herkömmlichen Mobilfunknetz; und
Fig. 4 den Nachrichtenfluss mit Pre-Paging in einem herkömmlichen Mobilfunknetz.

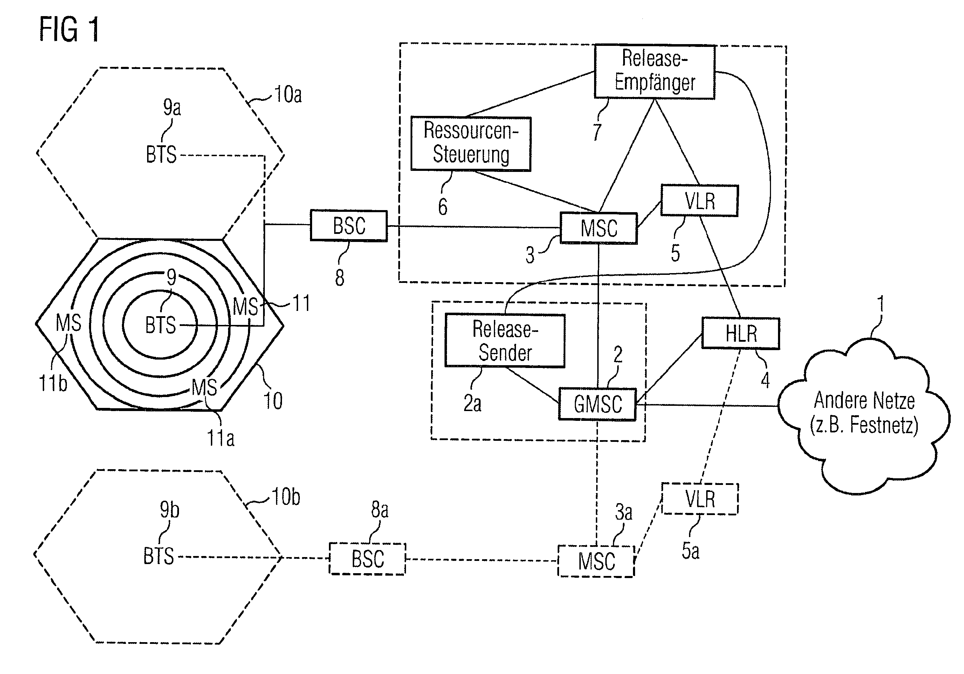

Fig. 1 zeigt schematisch den Aufbau eines Mobilfunknetzes mit erfindungsgemäßen Vermittlungsstellen. Das Mobilfunknetz ist mit einem anderen Netz 1, beispielsweise einem Festnetz, über eine Gateway-Vermittlungsstelle GMSC 2 verbunden. Die GMSC 2 ist somit zentrales Tor zu anderen Telekommunikationsnetzen. Sie weist einen mit ihr verbundenen Release-Sender 2a auf, welcher eine Freigabenachricht Release Resources senden kann. Die GMSC 2 ist mit weiteren Vermittlungsstellen MSC 3, 3a verbunden. Dabei soll hier nur eine der weiteren Vermittlungsstellen MSC 3 näher beschrieben werden, wohingegen weitere Vermittlungsstellen MSC 3a und diesen weiteren Vermittlungsstellen 3a zugeordnete Einrichtungen nur gestrichelt dargestellt sind und auf diese in der weiteren Beschreibung nicht näher eingegangen wird.

Die GMSC 2 hat durch eine Verbindung mit einer Heimatdatenbank HLR 4 Zugriff auf alle Benutzerdaten des Mobilfunknetzes. Das HLR 4 seinerseits ist verbunden mit Besucher-Teilnehmerdatenbanken VLR 5, 5a der besuchten Vermittlungsstellen MSC 3, 3a. Das VLR hält jeweils eine Kopie der relevanten Nutzerdaten aus dem HLR für diejenigen mobilen Teilnehmer, deren Endgeräte sich derzeit im Zuständigkeitsbereich der MSC 3 befinden.

Das MSC 3 weist eine Ressourcensteuerung 6 auf, welche die Ressourcen zu einer Verbindung reservieren und wieder freigeben kann. Dazu gehört einerseits die MSRN mit zugehörigen Ressourcen, welche den Rufpfad innerhalb des Vermittlungsnetzwerkes 2, 3, 4, 5 festlegt, und andererseits die Ressourcen, welche über Paging reserviert werden. Die Ressourcensteuerung 6 ist mit der MSC 3 und mit einem Releaseempfänger 7 verbunden, welcher die Release-Resources-Nachricht des Releasesenders 2a empfangen kann. Der Releaseempfänger 7 ist zusätzlich mit der MSC 3 und dem VLR 5 verbunden. Damit kann eine Release-Ressources-Nachricht sämtliche Einheiten der MSC erreichen.

Jede MSC 3, 3a ist mit einer oder mehreren Steuerungen BSC 8 (Basis Station Controller) für jeweils eine oder mehrere Basisstationen BTS 9, 9a, 9b (Base Transceiver Station) für eine zugehörige Funkzelle 10, 10a, 10b verbunden. Die BTS 9 versorgt ihre Funkzelle 10 mit den notwendigen Funksignalen und empfängt entsprechende Funksignale von mobilen Endgeräten MS 11, 11a, 11b (Mobile Station).

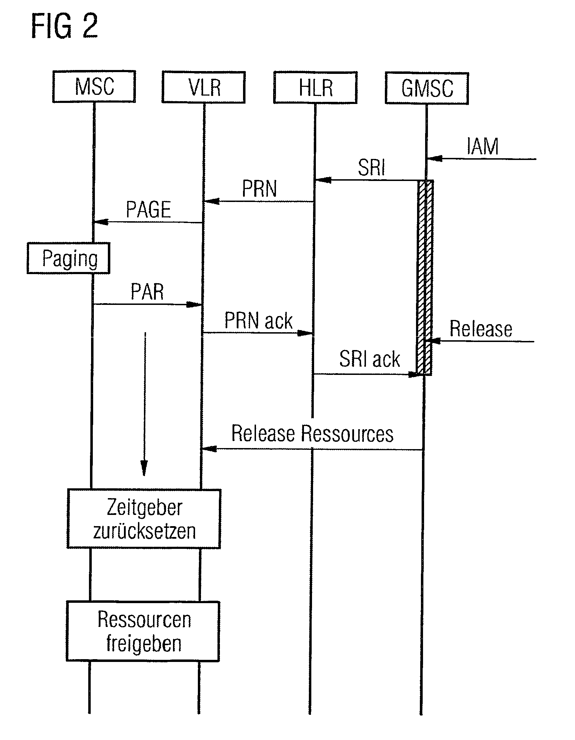

Anhand von Fig. 2 soll nunmehr der erfindungsgemäße Nachrichtenfluss in einem Mobilfunknetz dargestellt werden, wie es in Fig. 1 zu sehen ist. Dieser Nachrichtenfluss unterscheidet sich im ersten Teil, nämlich der SRI/PRN-Prozedur und dem Pre-Paging, nicht von dem Nachrichtenfluss, wie er in der Einleitung im Zusammenhang mit Fig. 4 beschrieben worden ist.

Ein rufender Teilnehmer aus dem Telekommunikationsnetz 1 wählt eine vollständige Mobilfunknummer, um eine Verbindung zu dem mobilen Endgerät 11 eines gerufenen Teilnehmers aufzubauen. Die GMSC 2 empfängt die entsprechende IAM-Nachricht. Sie sendet daraufhin eine erste Routinganfrage SRI an die Heimatdatenbank HLR 4, um den Rufpfad durch das Vermittlungsnetzwerk aufzubauen. Die HLR 4 schickt auf den Empfang der SRI-Nachricht hin eine Anfrage zur Zuweisung einer MSRN mittels einer PRN-Nachricht an das VLR 5. Die Information, welches VLR 5 anzusprechen ist, ist im HLR 4 abgelegt.

Das VLR 5 der besuchten MSC 3 sendet daraufhin eine Pagingnachricht PAGE an die MSC 3, welche per Paging den Kontakt zu dem mobilen Endgerät 11 sucht. Dazu wird die Pagingnachricht über die BSC 8 an die Basisstation BTS 9 übertragen. Hierbei wird in der Darstellung vereinfachend davon ausgegangen, dass der in dem VLR 5 gespeicherte Aufenthaltsort (Location Area, abgelegt als Location Area Code) des mobilen Endgerätes 11 bereits durch die Funkzelle 10 abgedeckt ist. Gewöhnlich umfasst eine Location Area mehrere Funkzellen. Die BTS 9 sendet die Pagingnachricht per Funk in die Funkzelle 10, welche die Location Area repräsentiert, und somit auch an das mobile Endgerät 11. Auf demselben Weg erreicht nach erfolgtem Paging die von dem Endgerät 11 ausgehende Bestätigungsnachricht wiederum die MSC 3. Durch das Paging sind auch die Ressourcen für die gewünschte Verbindung auf der Schnittstelle zwischen MSC 3 und BSC 8 reserviert.

Die MSC 3 sendet eine Nachricht PAR über das erfolgreiche Paging an das VLR 5. Im VLR 5 wird zu diesem Zeitpunkt ein Zeitgeber gestartet. Dieser Zeitgeber wartet ein festgelegtes Intervall, beispielsweise 90 s, in denen er die Ressourcen für den gewünschten Verbindungsaufbau freihält. Nach Ablauf dieses Intervalls werden die Ressourcen wieder freigegeben. Das VLR 5 sendet eine Nachricht PRN ack an das HLR 4, wobei die Nachricht auch die zugewiesene MSRN enthält. Das HLR 4 seinerseits sendet eine Bestätigungsmeldung SRI ack an die GMSC 2 und übermittelt dabei die MSRN. Damit ist die RSI/PRN-Prozedur und das Pre-Paging abgeschlossen.

Wenn nun die GMSC 2 in dem Zeitintervall seit dem Absenden der ersten Routinganfrage SRI eine Freigabenachricht Release aus dem Telekommunikationsnetz 1 des rufenden Teilnehmers erhält, also innerhalb des durch einen grauen Block markierten Intervalles, so ist zu diesem Zeitpunkt schon klar, dass die reservierten Ressourcen nicht verwendet werden. Statt dass also abgewartet wird, bis der Zeitgeber in dem VLR 5 abläuft, sendet die GMSC 2 über ihren Releasesender 2a eine Release-Ressources-Nachricht an das VLR 5 bzw. den Releaseempfänger 7 in der MSC 3. Der Releaseempfänger 7 informiert die Ressourcensteuerung 6 über den Eingang der Release-Ressources-Nachricht. Die Ressourcensteuerung 6 kann daraufhin die MSRN, ihr zugehörige Ressourcen innerhalb des Vermittlungsnetzwerkes 2, 3, 4, 5 und die während des Pagingvorgangs reservierten Ressourcen freigeben.

Mit diesem Verfahren und der zusätzlichen Release-Ressources-Nachricht kann zuverlässig erreicht werden, dass nicht mehr benötigte Ressourcen für einen von dem rufenden Teilnehmer abgebrochenen Verbindungsaufbau freigegeben werden. Insbesondere muss nicht der Ablauf des Zeitgebers abgewartet werden. Damit werden die Vorteile des Pre-Pagings, dass nämlich dann keine Ressourcen innerhalb des Vermittlungsnetzwerkes 2, 3, 4, 5 unnötig reserviert werden, wenn das gerufene mobile Endgerät überhaupt nicht erreichbar ist, ohne den mit dem Pre-Paging verbundenen Nachteil genutzt, dass Ressourcen beim Paging reserviert werden, welche dann bis zum Ablauf des Zeitgebers unnötig blockiert sind.

Trotz Einführung von Pre-Paging wird also der sonst mit Pre-Paging verbundene Nachteil unnötiger, durch Verlängerung des Zeitfensters zwischen SRI und SRI ack wahrscheinlicherer und wegen der zusätzlichen Ressourcen auch umfangreicherer Ressourcen-Belegungen durch die Erfindung vermieden.

## Patentansprüche

1. Verfahren zum Verbindungsaufbau mit Pre-Paging zu einem mobilen Endgerät (11) eines gerufenen Teilnehmers in einem Mobilfunknetz, welches die folgenden einander in dieser Reihenfolge auslösenden Schritte aufweist:
- Empfangen einer Verbindungsanfrage (IAM) eines rufenden Teilnehmers aus einem Telekommunikationsnetz durch eine Gateway-vermittlungsstelle (2), wobei die Verbindungsanfrage Informationen über den gewünschten gerufenen Teilnehmer enthält;
- Senden einer ersten Routinganfrage (SRI) von der Gateway-Vermittlungsstelle (2) an eine Heimat-Teilnehmerdatenbank (4), in der die Daten über den gerufenen Teilnehmer einschließlich einer aktuell zuständigen besuchten Vermittlungsstelle (3) abgelegt sind;
- Senden einer zweiten Routinganfrage (PRN) von der Heimat-Teilnehmerdatenbank (4) an eine Besucher-Teilnehmerdatenbank (5) der besuchten Vermittlungsstelle (3), welche eine Zuweisungsanfrage einer temporären Kennung (MSRN) für den gerufenen Teilnehmer enthält;
- Senden einer Paging-Anforderung (PAGE) von der Besucher-Teilnehmerdatenbank (5) an die zweite Vermittlungsstelle;
- Paging, indem die besuchte Vermittlungsstelle (3) eine Suchnachricht für das mobilen Endgerät (11) des gerufenen Teilnehmers in Funkzellen einschließlich einer besuchten Funkzelle (10) des mobilen Endgeräts (11) übermittelt und die temporäre Kennung (MSRN) einschließlich für die aufzubauende Verbindung notwendiger Ressourcen reserviert;
- Beantworten der Pre-Paging-Anforderung (PAR), der zweiten Routinganfrage (PRN ack) und schließlich der ersten Routinganfrage (SRI ack), wobei die temporäre Kennung (MSRN) übertragen wird;
**dadurch gekennzeichnet, dass**
wenn die Gateway-Vermittlungsstelle (2) in dem Zeitintervall seit dem Senden der ersten Routinganfrage (SRI) eine Nachricht (Release) empfängt, welche den Abbruch des Verbindungsaufbau anzeigt, die Gateway-Vermittlungsstelle (2) eine Freigabeanweisung (ReleaseRessources) an die Besucher-Teilnehmerdatenbank (5) der besuchten Vermittlungsstelle (3) sendet, auf deren Empfang hin die temporäre Kennung (MSRN), damit verbundene Ressourcen sowie die per Paging reservierten Ressourcen freigegeben werden.

2. Verfahren nach Anspruch 1,
**dadurch gekennzeichnet, dass**
die Freigabeanweisung (ReleaseRessources) von der Gateway-Vermittlungsstelle (2) an die Besucher-Teilnehmerdatenbank (5) der besuchten Vermittlungsstelle (3) mit der temporären Kennung (MSRN) geroutet wird.

3. Verfahren nach Anspruch 1 oder 2,
**dadurch gekennzeichnet, dass**
das Mobilfunknetz ein GSM-Netz oder ein UMTS-Netz ist.

4. Vermittlungsstelle (3,5) in einem Mobilfunknetz zur Vermittlung von Verbindungen mit Pre-Paging, welche einen Anschluss an eine Heimatdatenbank (4), eine Besucher-Teilnehmerdatenbank (5), eine Pagingeinrichtung (3) sowie eine Einrichtung (3) zum Senden und Empfangen von Nachrichten aufweist, welche dafür ausgelegt ist,
- eine Routinganfrage (PRN) einer Heimat-Teilnehmerdatenbank (4) zu empfangen und
- eine Bestätigung der Routinganfrage (PRN ack) zurückzusenden,
wobei die Pagingeinrichtung (3) dafür ausgelegt ist, auf den Empfang der Routinganfrage (PRN) hin ein Paging durchzuführen und entsprechende Ressourcen zu reservieren,
**gekennzeichnet durch**
eine Freigabe-Empfangseinrichtung (7), die dafür ausgelegt ist, eine Freigabeanweisung (ReleaseRessources) zu einer temporären Kennung (MSRN) zu empfangen
und eine Ressourcensteuerung (6), welche mit der Freigabe-Empfangseinrichtung (7) verbunden ist und dafür ausgelegt ist, auf die Freigabeanweisung (ReleaseRessources) hin die temporäre Kennung (MSRN), damit verbundene Netzressourcen sowie per Paging reservierte zugehörige Ressourcen freizugeben.

5. Gateway-Vermittlungsstelle (2) in einem Mobilfunknetz zur Vermittlung von Verbindungen mit Pre-Paging, welche einen Anschluss an ein Telekommunikationsnetz (1) aufweist sowie eine Einrichtung (2) zum Senden und Empfangen von Nachrichten, welche dafür ausgelegt ist,
- eine Routinganfrage (SRI) an eine Heimat-Teilnehmerdatenbank (3) zu senden und
- eine Bestätigung der Routinganfrage (SRI ack) mit einer temporären Kennung (MSRN) zu empfangen,
**gekennzeichnet durch**
eine Freigabe-Sendeeinrichtung (2a), um eine Freigabenachricht (ReleaseRessources) für die temporäre Kennung (MSRN) an eine besuchte Vermittlungsstelle (3) nach Anspruch 4 zu senden.

6. Mobilfunknetz mit einer besuchten Vermittlungsstelle (3) nach Anspruch 4 und einer Gateway-Vermittlungsstelle (2) nach Anspruch 5.

7. Mobilfunknetz nach Anspruch 6,
**dadurch gekennzeichnet, dass**
das Mobilfunknetz ein GSM-Netz oder ein UMTS-Netz ist.

## Claims

1. Method setting up a link with pre-paging to a mobile station (11) of a called subscriber in a mobile radio network, which features the following steps to be initiated consecutively in the order shown below:
- Receiving an Initial Address Message (IAM) of a calling subscriber from a telecommunications network through a gateway switching centre (2), whereby the address message contains information about the desired called subscriber;
- Sending a first service request (SRI) from the gateway switching centre (2) to a home location register (4), in which the data about the called subscriber including a visited switching centre currently responsible (3) is stored;
- Sending a second routing request (PRN) from the home location register (4) to a visitor location register (5) of the visited switching centre (3), which contains an allocation request of a temporary identifier (MSRN) for the called subscriber;
- Sending a paging request (PAGE) from the visitor location register (5) to the second switching centre;
- Paging, by the visited switching centre (3) sending a paging message for the mobile station (11) of the called subscriber into radio cells including a visited radio cell (10) of the mobile station (11) and reserving the temporary identifier (MSRN) including the resources necessary for the link to be set up;
- Responding to the pre-paging request (PAR), the second routing request (PRN ack) and finally the first routing request (SRI ack), in which case the temporary identifier (MSRN) is transmitted;
**Characterised in that**,
if the gateway switching centre (2) receives a message (Release) in the time interval since the last routing request (SRI) which indicates that the call has been aborted, the gateway switching centre (2) sends a release allocation (Release Resources) to the visitor location register (5) of the visited switching centre (3), on receipt of which the temporary identifier (MSRN), of associated resources as well as the resources reserved by paging are released.

2. Method as claimed in claim 1,
**characterised in that**,
the release instruction (Release Resources) from the gateway switching centre (2) to the visitor location register (5) of the visited switching centre (3) is routed with the temporary identifier (MSRN).

3. Method as claimed in claim 1 or 2,
**characterised in that**,
the mobile radio network is a GSM network or a UMTS network.

4. Switching centre (3, 5) in a mobile radio network for determination of calls with pre-paging, which features a connection to a home location register (4), a visitor location register (5), a paging device (3) and also a device (3) for transmitting and receiving messages, which is designed to
- receive a routing request (PRN) of a home location register (4) and
- return an acknowledgement to the routing request (PRN ack), whereby the paging device (3) is designed so that, on receiving the routing request (PRN), it executes paging and reserves the corresponding resources,
**characterised by**
a release receiving device (7), which is designed to receive the release instruction (Release Resources) for a temporary identifier (MSRN)
and a resource controller (6) which is connected to the release receiving device (7) and is designed, on receiving the release instruction (Release Resources), to release the temporary identifier (MSRN), network resources associated with it and also associated resources reserved by paging.

5. Gateway switching centre (2) in a mobile radio network for switching calls with pre-paging, which features a connection to a telecommunications network (1) and also a device (2) for transmitting and receiving messages, which is designed to
- transmit a routing request (SRI) to a home location register (3) and
- receive an acknowledgement to the routing request (SRI ack) with a temporary identifier (MSRN),
**characterised by**
a release transmitter device (2a), to transmit a release message (Release Resources) for the temporary identifier (MSRN) to a visited switching centre (3) as claimed in claim 4.

6. Mobile radio network with a visited switching centre (3) as claimed in claim 4 and a gateway switching centre (2) as claimed in claim 5.

7. Mobile radio network as claimed in claim 6,
**characterised in that**,
the mobile radio network is a GSM network or a UMTS network.

## Revendications

1. Procédé pour établir une liaison avec Pre-Paging vers un terminal mobile (11) d'un usager appelé dans un réseau radio mobile, lequel comporte les étapes suivantes qui se déclenchent l'une l'autre dans cet ordre:
- réception d'une demande de liaison (IAM) d'un usager appelant à partir d'un réseau de télécommunications par un centre de commutation passerelle (2), la demande de liaison contenant des informations sur l'usager appelé souhaité;
- envoi d'une première demande de routage (SRI) du centre de commutation passerelle (2) à une base de données d'origine d'usager (4) dans laquelle sont déposées les données concernant l'usager appelé, y compris un centre de commutation visité actuellement compétent (3);
- envoi d'une deuxième demande de routage (PRN) de la base de données d'origine d'usager (4) à une base de données visiteurs d'usager (5) du centre de commutation visité (3), laquelle contient une demande d'attribution d'un identifiant temporaire (MSRN) pour l'usager appelé;
- envoi d'une demande de Paging (PAGE) de la base de données visiteurs d'usager (5) au deuxième centre de commutation;
- Paging, par le fait que le centre de commutation visité (3) transmet un message de recherche pour le terminal mobile (11) de l'usager appelé dans des cellules radio y compris une cellule radio visitée (10) du terminal mobile (11) et réserve l'identifiant temporaire (MSRN) y compris ressources nécessaires pour la liaison à établir;
- réponse à la demande de Pre-Paging (PAR), la deuxième demande de routage (PRN ack) et finalement la première demande de routage (SRI ack), l'identifiant temporaire (MSRN) étant transmis;
**caractérisé en ce que**
si le centre de commutation passerelle (2) reçoit, dans l'intervalle de temps qui s'est écoulé depuis l'émission de la première demande de routage (SRI), un message (Release) qui indique l'interruption de l'établissement de liaison, le centre de commutation passerelle (2) envoie un ordre de déblocage (ReleaseRessources) à la base de données visiteurs d'usager (5) du centre de commutation visité (3) suite à la réception duquel l'identifiant temporaire (MSRN), des ressources connexes et les ressources réservées par Paging sont débloqués.

2. Procédé selon la revendication 1, **caractérisé en ce que** l'ordre de déblocage (ReleaseRessources) est routé du centre de commutation passerelle (2) vers la base de données visiteurs d'usager (5) du centre de commutation visité (3) avec l'identifiant temporaire (MSRN).

3. Procédé selon la revendication 1 ou 2, **caractérisé en ce que** le réseau radio mobile est un réseau GSM ou un réseau UMTS.

4. Centre de commutation (3, 5) dans un réseau radio mobile pour commuter des liaisons avec Pre-Paging, lequel comporte une connexion à une base de données d'origine (4), une base de données visiteurs d'usager (5), un dispositif de Paging (3) ainsi qu'un dispositif (3) pour émettre et recevoir des messages, lequel est conçu pour
- recevoir une demande de routage (PRN) d'une base de données d'origine d'usager (4) et
- envoyer en retour une confirmation de la demande de routage (PRN ack),
le dispositif de Paging (3) étant conçu pour, à la réception de la demande de routage (PRN), effectuer un Paging et réserver des ressources correspondantes,
**caractérisé par**
un dispositif récepteur de déblocage (7) qui est conçu pour recevoir un ordre de déblocage (ReleaseRessources) concernant un identifiant temporaire (MSRN) et
une commande de ressources (6) qui est reliée au dispositif récepteur de déblocage (7) et est conçue pour débloquer, sur l'ordre de déblocage (ReleaseRessources), l'identifiant temporaire (MSRN), des ressources réseau connexes ainsi que des ressources associées réservées par Paging.

5. Centre de commutation passerelle (2) dans un réseau radio mobile pour commuter des liaisons avec Pre-Paging, lequel comporte une connexion à un réseau de télécommunications (1) ainsi qu'un dispositif (2) pour émettre et recevoir des messages, lequel est conçu pour
- envoyer une demande de routage (SRI) à une base de données d'origine d'usager (3) et
- recevoir une confirmation de la demande de routage (SRI ack) avec un identifiant temporaire (MSRN),
**caractérisé par** un dispositif émetteur de déblocage (2a) pour envoyer un message de déblocage (ReleaseRessources) pour l'identifiant temporaire (MSRN) à un centre de commutation visité (3) selon la revendication 4.

6. Réseau radio mobile avec un centre de commutation visité (3) selon la revendication 4 et un centre de commutation passerelle (2) selon la revendication 5.

7. Réseau radio mobile selon la revendication 6, **caractérisé en ce que** le réseau radio mobile est un réseau GSM ou un réseau UMTS.
